# EUROPEAN PATENT APPLICATION

(11) **EP 2 933 207 A1**
(43) Date of publication of application: **21.10.2015**
(21) Application number: 15161318.9
(22) Date of filing: 27.03.2015
(51) Int. Cl.: B65D 90/00, B60P 3/07, B65D 90/08

(54) **CONTAINER FOR MOTOR VEHICLE TRANSPORT**

(30) Priority: 14.04.2014 ES 201430552
(71) Applicant: J.S.V. Logistic, S.L., 09299 Miranda de Ebro (Burgos) (ES)
(72) Inventor: Herzog Herzog, Antonio, 09299 MIRANDA DE EBRO (Burgos) (ES); Casero Murillo, Javier, 09299 MIRANDA DE EBRO (Burgos) (ES)
(74) Representative: Ungria López, Javier

(57) **Abstract**

Container for transporting motor vehicles, being the type of containers used to transport very different goods by land, sea, rail and air, wherein the essential purpose of the container is transporting motor vehicles, for which it presents a vertically movable element, by means of the corresponding moving means, adopting a first position attached to the floor of the container and a second elevated position, defining two levels for transporting motor vehicles according to two levels.

## Description

### OBJECT OF THE INVENTION

The following invention, as expressed in the statement of this descriptive report, refers to a container for transporting motor vehicles, being the type of containers used to transport very different goods by land, sea, rail and air. For this purpose, the container incorporates a vertically movable element that defines two levels for storage and transportation of motor vehicles on two levels and the vertically movable element comprises, in a preferred embodiment of the invention, two parallel longitudinal side plates.

Thus, motor vehicles may be transported in containers, so that they remain in said containers from the time of leaving the assembly line to the point of destination for their sale, i.e., motor vehicles will remain inside a container without having to be handled directly during their transportations and are protected from environmental conditions.

Furthermore, by placing the motor vehicles in the corresponding container, according to their measurements, it can accommodate up to six motor vehicles during their storage in the respective holding yard, either of the factory itself or of any port or airport, will occupy a considerably smaller space since the containers can be stacked and in the conventional place for storing three vehicles up to five containers can be stacked, i.e., up to 30 vehicles.

### FIELD OF APPLICATION

This specification describes a container for transporting motor vehicles, with specific application for the transport of motor vehicles and the transportation of which may take place by land, sea, rail and air.

### BACKGROUND OF THE INVENTION

As is known in the factories of motor vehicles when vehicles leave the assembly line finished they are going to be stored in the holdings yards fitted out for this purpose. In these holding yards, hundreds of vehicles may be stored, waiting to be collected for transport and are outdoors, so that not only do they get dirty but there is also the risk that, in the event of possible adverse environmental conditions, they may suffer significant damage, for example, in a hailstorm with the economic losses that this would incur.

Also, conventionally, motor vehicles can be transported from the factory holding yard to their destinations, in some cases, only overland by car carrier trailers, so, normally, they are located on two levels to take as many as possible and to optimise the transport.

Thus, according to this variant of practical embodiment of action, the motor vehicles, in the holding yard of the factory are loaded, in varying numbers, onto the corresponding car carrier trailer and when they have arrived they can be unloaded in the point of distribution and/or sale. Therefore during this manipulation they may be damaged during their handling as a result of accidental knocks with the problems this represents.

It is also common for motor vehicles to have to be shipped to distant destinations that require transportation, for example, by ship. In this case, the cars are unloaded in the corresponding holding yard of the port, they have arrived at in car carrier trailers, and then are put onto the corresponding ship, designed for this purpose, remaining stored in large spaces. When the ship reaches its destination they must be unloaded one by one and sent to their final destination, for example, on a new car carrier trailer, which complicates their handling and increases the risk of possible damage to the motor vehicles.

In short, conventionally, motor vehicles from the moment they leave the assembly line and are stored in the corresponding holding yard to their point of sale are exposed to the outdoors and are handled one by one with the risk being damaged by both environmental causes and knocks on them during their handling.

### DESCRIPTION OF THE INVENTION

This specification describes a container for transporting motor vehicles, being the type of containers used to transport of very different goods by land, sea, rail and air, so that the container comprises:
✔ a vertically movable element that defines two levels for housing and transporting corresponding motor vehicles;
✔ at least, one pair of vertical tubular struts on the longest side walls of the container that house moving means of the movable element;
✔ at least, one door on one of the longest side walls of the container for the access of the motor vehicles, and;
✔ anchoring means for the motor vehicles.

Thus, the vertically movable element adopts a first position of attachment to the floor of the container for transportation and loading/unloading of the motor vehicles and a second elevated position for transportation of motor vehicles.

In a first embodiment of the invention the vertically movable element is constituted by a pair of parallel side longitudinal plates.

Also, in a second embodiment of the invention, the movable element can be constituted by a platform with a width similar to that of the container itself.

Similarly, in another embodiment of the invention the means for moving the movable element are defined by hydraulic cylinders housed in corresponding vertical tubular struts of the longest side walls of the container.

Logically, the moving means of the vertically movable element may be defined by any other equivalent means to said hydraulic cylinders.

The anchoring means of the motor vehicles are defined according to conventional means used in anchoring motor vehicles in the corresponding car carrier trailers and that may be defined by inverted "U" bars for stopping the wheels of the vehicles.

The pair of parallel side longitudinal plates may be defined by articulated sections, associated with respective pairs of hydraulic cylinders, allowing adapting them to an inclined position, thereby improving the internal space of the container and being able to transport more vehicles or larger vehicles.

In another embodiment and in order to optimise the transport of motor vehicles the container may be 45 feet and three motor vehicles will be housed on each of the defined levels, allowing transporting six motor vehicles.

Thus, when the motor vehicles leave the assembly line they can be deposited in the respective container that is in the holding yard of the factory until they are going to be transported by the corresponding means of transport, to the applicable place.

To complement the description which is to be performed immediately after, and in order to contribute to better understanding of the characteristics of the invention, this descriptive specification is accompanied by a set of drawings, in the figures of which for informative but not restrictive reasons the most characteristic details of the invention are represented.

### BRIEF DESCRIPTION OF THE DESIGNS

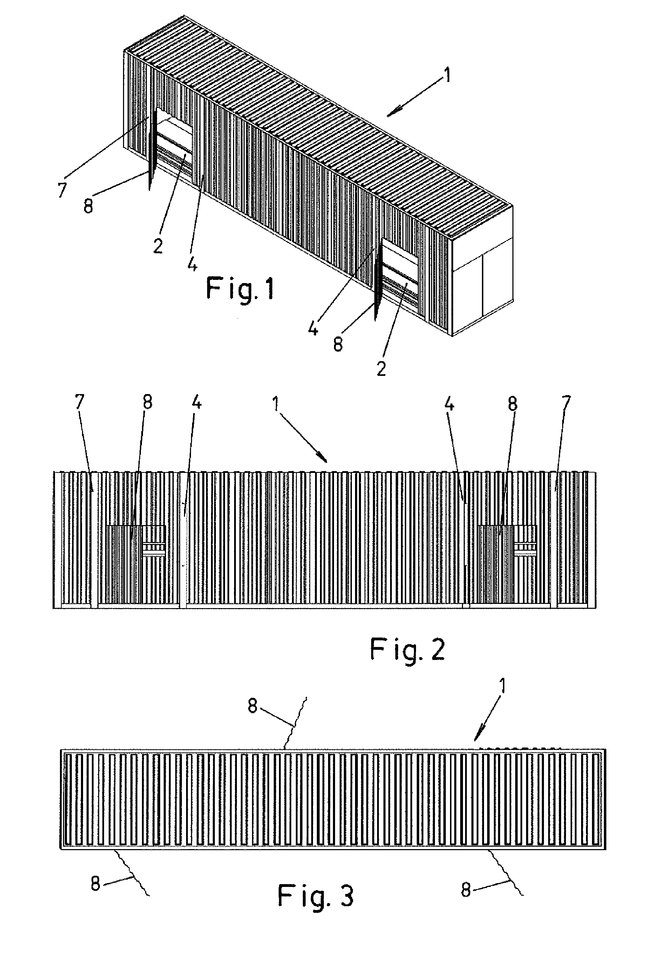

Figure 1. Shows a perspective view of a container object of the invention where two doors can be observed on one of its longer side walls in order to access to the interior.
Figure 2. Shows a side view of a container object of the invention of the previous figure with the doors closed.
Figure 3. Shows a plan view of the container of figure 1, where the doors are opened.
Figure 4. Shows a side view of a container object of the invention after eliminating the side wall where it can be observed how three vehicles have been put on the liftable element, and a pair of vertical stiffener struts and a pair of vertical tubular struts that house respective moving means.
Figure 5. Shows a side view of the container of the previous figure where it can be observed how the liftable element, with its corresponding vehicles, has been lifted and three new cars have been arranged at the bottom.
Figure 6. Shows a cross-sectional view of figure 4 where it can be observed how the vehicles are on the pair of parallel side platforms, with these slightly lifted from the floor of the container.
Figure 7. Shows a cross-sectional view of figure 5 where it can be observed how the vehicles are on two levels, so that the pair of parallel side platforms define a floor and the floor of the container itself defines another floor for positioning vehicles on the two floors with the respective brake holders.

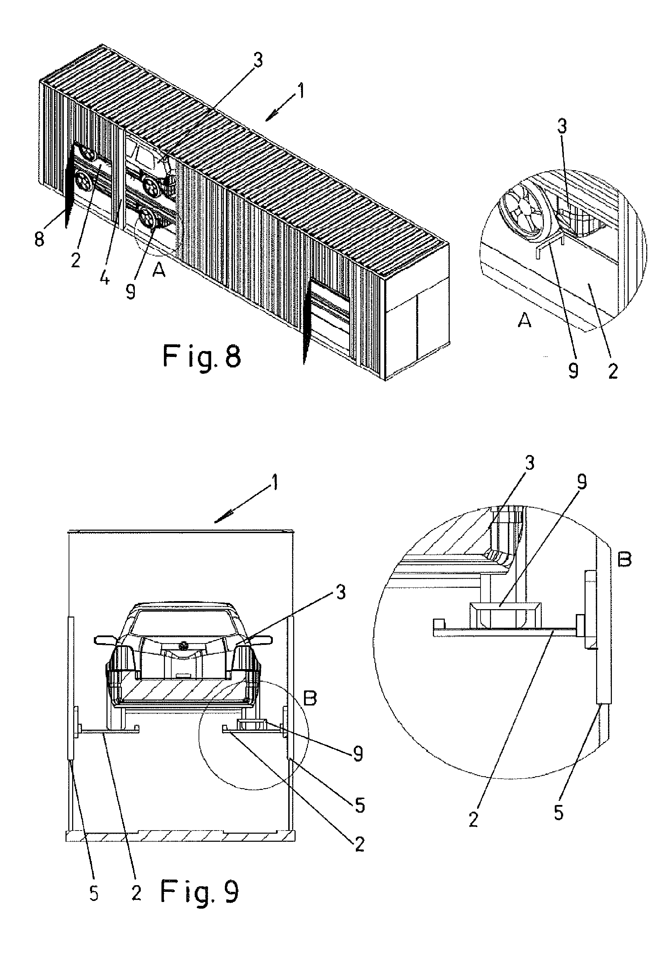

Figure 8. Shows a perspective view of a container object of the invention with the doors of one of its side walls opened and having made an opening that allows observing how there is a vehicle on the liftable element and another on the floor of the container, as well as a detail "A" of a brake holder.
Figure 9. Shows a cross-sectional view of a container object of the invention where it can be observed how the pair of parallel side platforms are fixed to corresponding observable hydraulic cylinders after eliminating the vertical tubular struts that houses them.
Figures 10 and 11 represent two pairs of containers to be transported by a road train, allowing increasing the transport capacity on transporting two containers.

### DESCRIPTION OF A PREFERRED EMBODIMENT

In view of the mentioned figures and according to the numbering adopted it can be seen how the container 1, object of the invention, is the type of containers used to transport very different goods by land, sea, rail and air, and wherein the container 1 incorporate, as its essential object, a vertically movable element such as a pair of parallel side platforms 2, to be able to define two levels for housing corresponding motor vehicles 3.

To this end, on both side walls of container 1 it incorporates, at least, one pair of vertical tubular struts 4 that house respective means for moving the vertically movable element and whose moving means can be constituted by hydraulic cylinders 5. The means for moving the vertically movable element could be any other equivalent means able to move the vertically movable element from a first position of attachment to the floor of the container 1 to a second elevated position carrying motor vehicles 3.

Likewise, the container 1 also presents on both side walls, at least, one pair of vertical stiffener struts 7 and on, at least, one of said side walls it will have a door 8 to access inside.

Thus, in the loading position of the motor vehicles the vertically movable element will be attached to the floor of container 1 and the vehicles to be transported will be put inside, so that once inside it will be lifted using the vertical moving means to their lifted position, and will allow new motor vehicles to be put inside container 1 positioned on its floor with the lifted movable element defining a second level.

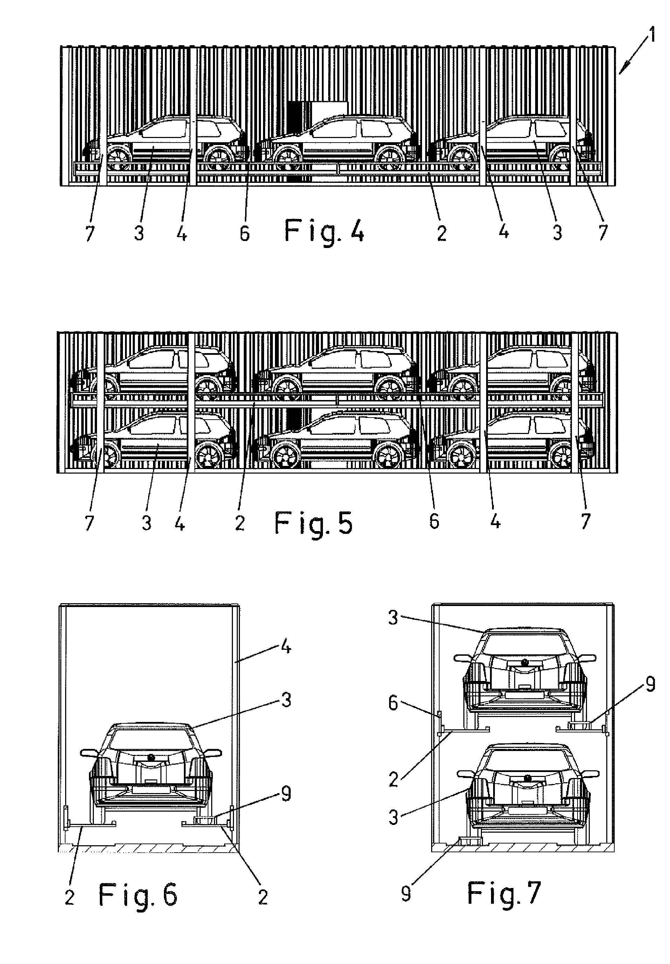

Thus, in a practical embodiment of the invention, with the liftable element defined by a pair of parallel side platforms 2 and attached to the floor of the container 1, the vehicles 3 will be introduced in the container 1 and when they have all be positioned the vertical moving means will be activated, said vertical moving means being defined by hydraulic cylinders 5, to lift the aforementioned pair of parallel side platforms 2 and allowing entering new vehicles on the floor of container 1, ending up as shown in figure 5.

Once the motor vehicles 3 have been loaded, they will be anchored using some conventional holders 9 used in car carrier trailers, as observed in figure 5 and detail thereof.

The pair of parallel side longitudinal plates 2 can be defined by articulated or independent sections associated with respective pairs of hydraulic cylinders, being able to adapt themselves to an inclined position, thereby improving the internal space of the container and being able to transport more vehicles or larger vehicles.

A stiffener lattice 6 is associated to the pair of parallel side longitudinal plates.

Also, as indicated above, container 1 will be equipped with, at least, one door 8 on, at least, one of its side walls, and it can be observed how in one practical embodiment the container 1 will have a door 8 one of its side walls and two doors 8 at its other side wall, being able to access inside and place the holders 9 properly.

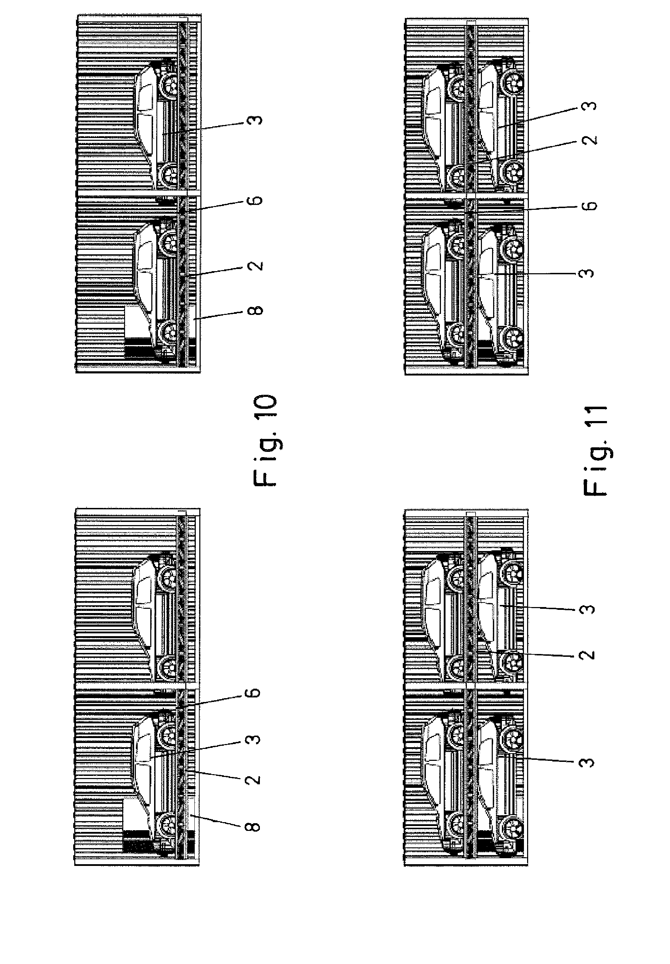

Likewise, the containers with the corresponding vehicles could be transported by road trains, so that in figures 10 and 11 respective pairs of containers 1 are observed for the respective road train. In a practical embodiment of the invention the train may carry two vehicles on each of the levels defined therein, allowing the transport of eight vehicles. Similarly, the pair of parallel side platforms 2 may be articulated or independent for each of the vehicles 3 allowing their articulation.

Thus, the possibility of storing the vehicles in the containers herein disclosed from the moment they leave the production line provides the following significant advantages:
➢ they are protected from dirt that accumulates on vehicles stored in the factory holding yard;
➢ they are protected from adverse environmental conditions, such as hailstorms that might eventually cause major damage to the vehicles with the economic cost that this represents;
➢ handling vehicles in their shipments that might cause possible knocks or scratches is avoided;
➢ less space is occupied, since each container can accommodate, for example, six vehicles and they can be stacked, so that, in this case, in the space they occupy, conventionally, three motor vehicles in the holding yard, by the container object of the invention there can be up to five containers, that is, up to 30 vehicles;
➢ when the destination of vehicles includes transport by sea during the waiting time in the port holding yard they will occupy less space and the containers may be handled by the corresponding crane, i.e., the vehicles do not have to be handled one by one, with the drawbacks already mentioned;
➢ in transport by sea conventional ships for the transport of containers with the corresponding vehicles can be used, and;
➢ finally, on arriving in the port the containers can be unloaded by the corresponding crane and in their transport to the point of destination the vehicles will be transported, also, in the same container, avoiding their handling one by one.

## Claims

1. **Container for motor vehicle transport**, being the type of containers used to transport goods by land, sea, rail and air, the container is **characterised in that** it comprises:
✔ a vertically movable element (2) that defines two levels for housing and transporting corresponding motor vehicles (3);
✔ at least, one pair of vertical tubular struts (4) on longer side walls of the container (1), the vertical tubular struts (4) housing respective means for moving (5) the vertically movable member (2);
✔ at least, one door (8) on one of the longer side walls of the container (1) to access the motor vehicles (3), and;
✔ anchoring means for the motor vehicles (3).

2. **Container for motor vehicle transport**, according to claim 1, **characterised in that** the vertically movable element (2) is configured for adopting a first position attached to the floor of the container (1) for loading/unloading motor vehicles (3) and a second lifted position for transporting the motor vehicles (3) placed on said vertically movable element (2).

3. **Container for motor vehicle transport**, according to claim 1, **characterised in that** the vertically movable element (2) is constituted by a pair of parallel side longitudinal plates (2) on which the motor vehicles (3) are positioned.

4. **Container for motor vehicle transport**, according to claim 1, **characterised in that** the vertically movable element (2) comprises a platform with a similar width to the container (1) width, on which the motor vehicles are positioned (3).

5. **Container for motor vehicle transport**, according to claim 1, **characterised in that** the moving means (5) of the vertically movable element (2) are defined by hydraulic cylinders (5) housed in the corresponding vertical tubular struts (4) of the longer side walls of the container (1).

6. **Container for motor vehicle transport**, according to claim 1, **characterised in that** in each of the levels defined in the container (1) house three motor vehicles.

7. **Container for motor vehicle transport**, according to claims 1 and 3, **characterised in that** the pair of parallel side longitudinal plates (2)are defined by articulated sections, associated with respective pairs of hydraulic cylinders (5), the pair of parallel side longitudinal plates (2) being able to adapt an inclined position.
